# EUROPEAN PATENT APPLICATION

(11) **EP 3 340 691 A1**
(43) Date of publication of application: **27.06.2018**
(21) Application number: 16791963.8
(22) Date of filing: 07.04.2016
(51) Int. Cl.: H04W 48/16

(54) **METHOD FOR INITIATING WI-FI VOICE SERVICE, LTE COMMUNICATION DEVICE, TERMINAL, AND COMMUNICATION SYSTEM**

(30) Priority: 19.08.2015 CN 201510512558
(71) Applicant: ZTE Corporation, Shenzhen, Guangdong 518057 (CN)
(72) Inventor: LI, Daohong, Shenzhen Guangdong 518057 (CN)
(74) Representative: Nordmeyer, Philipp Werner
(86) International application number: PCT/CN2016/078713
(87) International publication number: WO 2016/180113

(57) **Abstract**

A method for initiating a Wi-Fi voice service, an LTE communication device, a terminal, and a communication system; a Long Term Evolution (LTE) network communication device receives IP address information of a preset evolved packet data network gateway (ePDG); the LTE network communication device sends the ePDG IP address information to a terminal by means of the LTE network; the terminal, in a wireless fidelity (Wi-Fi) network, and on the basis of the ePDG IP address information sent previously by the LTE network communication device, establishes a communication link with the corresponding ePDG, and initiates a Wi-Fi voice service by means of the ePDG having said communication link. In the method of the embodiments of the present invention, the terminal does not need to rely on the deployment of domain name system (DNS) devices, and can discover ePDG directly by means of the LTE network; the method is simple and the efficiency of ePDG discovery is high, accelerating the speed of ePDG attachment to a terminal, and simplifying the network deployment and configuration of a Wi-Fi voice service (i.e. VoWiFi service).

## Description

### TECHNICAL FIELD

This disclosure relates to but is not limited to the field of wireless communications, and in particular relates to a method, a Long Term Evolution (LTE) communication device, a terminal, and a communication system for initiating a Wireless Fidelity (Wi-Fi) voice service.

### BACKGROUND

Wireless Fidelity (Wi-Fi) is a technology that can connect terminals such as personal computers and handheld devices (such as Pads and mobile phones) to each other wirelessly. Wi-Fi is a brand in wireless network communication technology which is owned by the Wi-Fi Alliance. The purpose of Wi-Fi is to improve the interoperability between wireless network products based on the IEEE 802.11 standard. In the field of wireless LAN, Wi-Fi refers to "wireless compatibility certification", which is essentially a commercial certification that uses radio waves to connect to the Internet. Common implementations for Wi-Fi include implementations by routers, that is, terminals within the effective coverage of the radio wave of the wireless router may all use Wi-Fi for networking. The advantage of Wi-Fi is that there is no need for wiring, and thus it is not limited by the wiring conditions. Also, since the power of the transmitted signal is lower than 100mw, which is lower than the transmitting power of the terminal, Wi-Fi access is relatively safe and healthy. If the wireless router is connected to the Internet through an asymmetrical digital subscriber line (ADSL) or other paths, the network constructed by the wireless router is also called a "hot spot". Since using the frequency band of Wi-Fi does not require any telecommunication operating licenses worldwide, Wi-Fi wireless devices are provided a wireless air interface that can be used worldwide which is extremely inexpensive and has extremely high data bandwidth.

The Long Term Evolution (LTE) network is an evolution of The Third Generation Mobile Communication Technology (3G) network. In The Second Generation Mobile Communication Technology (2G) specification or 3G network, the voice service of a mobile terminal is mainly implemented in the circuit-bearing domain (CS domain). However, in LTE and 4G networks, there is only a data domain (PS domains) but no CS domain. Therefore, a LTE mobile terminal needs to use PS domain-based VoLTE (voice services over LTE) technologies to implement voice services in LTE and 4G networks.

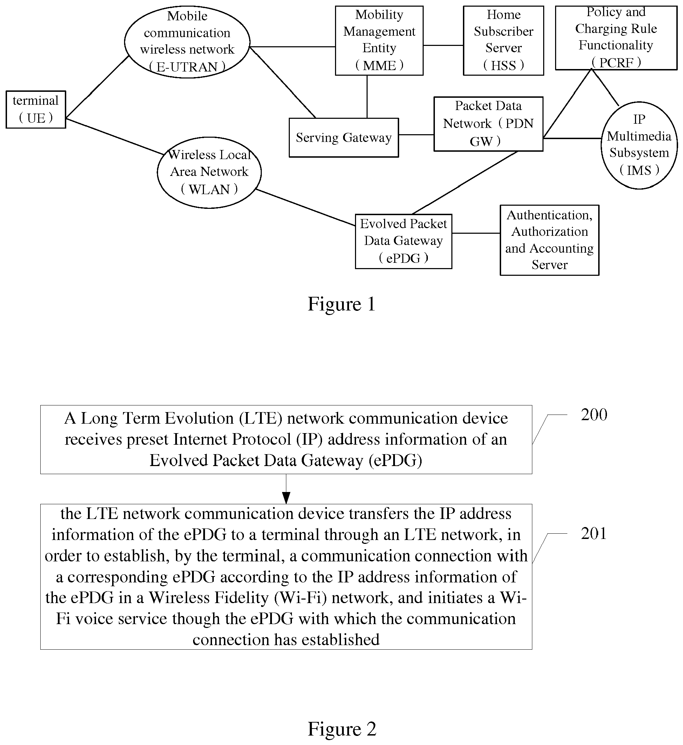

With the advent of terminals that support Wi-Fi voice services (VoWiFi), VoWiFi becomes a complement to IMS-based voice services (VoLTE). The interworking between VoWiFi and VoLTE has become the trend of development for current voice services. The interworking of VoWiFi and VoLTE follows the 3GPP and non-3GPP interoperability standards formulated by The 3rd Generation Partnership Project (3GPP). Figure 1 shows the network architecture of the interworking of VoWiFi and VoLTE, which includes the following devices/network elements:
User Equipment (UE): it connects to Wi-Fi or LTE networks to access VoWiFi or VoLTE services.

Evolved Universal Mobile Telecommunications System (UMTS) Terrestrial Radio Access Network (E-UTRAN): it is the mobile communication wireless network in LTE.

Mobility Management Entity (MME): it is a function entity in control plane as well as a server that temporarily stores user data. It is responsible for managing and storing UE contexts (such as user identification, mobility management status, user security parameters, etc.), assigning temporary identifiers to users, authenticating a user accessing a tracking area or network when the UE is camped on the tracking area or network; and processing all non-access stratum messages between the MME and the UE.

Home Subscriber Server (HSS): it stores user subscription data permanently.

Serving gateway (SGW or Serving GW): serving gateway is an entity in the user plane responsible for routing processes of data in the user plane. It manages and stores bearer contexts of UEs, such as service parameters of an IP bearer and routing information within networks. It is also an anchor for the user plane within a 3GPP system. A user may have only one serving gateway at a time.

Packet Data Network Gateway (PGW or PDN GW): it is a gateway responsible for accessing a UE to a PDN (Packet Data Network) and assigning user IP addresses. It is also a mobility anchor for 3GPP and non-3GPP access systems. A user may access to multiple PDN GWs at a time.

Policy and Charging Rule Functionality (PCRF): This function entity mainly generates quality of service (QoS) rules and charging rules that control user data delivery based on service information, user subscription information, and operator configuration information. The functional entity can also control the establishment and release of bearers in an access network.

Wireless Local Area Network (WLAN): it is the access network of VoWiFi services.

3GPP Authentication, Authorization and Accounting Server (3GPP AAA Server): it is responsible for the UE authentication and subscription.

Evolved Packet data gateway (ePDG): This gateway is an access gateway for 3GPP and non-3GPP interoperability. A UE connected by way of the WLAN goes to the 3GPP AAA Server for authentication and subscription through the ePDG, and accesses the PDN GW through the ePDG to further use resources of the LTE core network.

IP Multimedia Subsystem (IMS): it is a subsystem proposed by 3GPP to support IP multimedia services. Its distinctive features are: use of the Session Initiation Protocol (SIP) system, communication being independent of access methods, and possessing capabilities such as separation of control functions and bearer capabilities for multiple multimedia services, separation of paging and sessions, separation of applications and services, separation of services and networks, and integration of mobile services and Internet services.

Before using the VoWiFi service, a UE needs to discover an IP address of the ePDG, set up an Internet Protocol Security (IPSec) tunnel with the ePDG, authenticate with the 3GPP AAA Server through the ePDG, and establish a GPRS tunneling protocol (GTP) tunnel or Proxy Mobile IP (PMIP) tunnel with the PDN GW through the ePDG, in order to achieve access to LTE core network and VoWiFi and VoLTE interworking. According to the current 3GPP standard implementation, the UE needs to construct a Fully Qualified Domain Name (FQDN) to query the Domain Name System (DNS) Server to obtain the IP address of the ePDG. However, in actual applications, the method of obtaining the IP address of the ePDG through the DNS query by the terminal poses high requirements for network deployments, such as, a DNS device needs to be deployed, and a mapping relationship from the FQDNs to the IP addresses of ePDGs needs to be configured. When WLANs are deployed by different operators, a problem of interworking between DNS devices of different operators needs to be solved, and even a higher-level DNS device may need to be deployed so as to query in the higher-level DNS device. In this case, the query efficiency is low, and the method of deployment and configuration is complicated.

### SUMMARY

The following is an overview of the subject matter described detailed herein. This summary is not intended to limit the scope of the claims.

The embodiments of the present disclosure provide a method, an LTE communication device, a terminal, and a communication system for initiating a WI-FI voice service, which can simplify network deployment and configuration of a Wi-Fi voice service.

An embodiment of the present disclosure provides a method for initiating a WI-FI voice service, including: receiving, by a LTE network communication device, preset IP address information of an ePDG; and transferring, by the LTE network communication device, the IP address information of the ePDG to a terminal through an LTE network, in order to establish, by the terminal, a communication connection with a corresponding ePDG according to the IP address information of the ePDG in a Wi-Fi network, and initiating a Wi-Fi voice service though the ePDG with which the communication connection has established.

Optionally, the LTE network communication device includes a mobility management entity, a serving gateway, or a packet data network gateway.

Optionally, the IP address information of the ePDG is transferred to the terminal by the LTE network communication device when the process of attaching to an LTE network, and/or creating a session, and/or modifying a session, and/or deleting a session, and/or a creating a bearer and/or modifying a bearer and/or deleting a bearer is performed by the terminal.

In another aspect, an embodiment of the present disclosure further provides a method for initiating a Wi-Fi voice service, including: receiving, by a terminal, IP address information of an ePDG from a LTE network communication device in a LTE network; and establishing, by the terminal, a communication connection with a corresponding ePDG according to the IP address information of the ePDG in a Wi-Fi network, and initiating a Wi-Fi voice service though the ePDG with which the communication connection has established.

Optionally, the IP address information of the ePDG includes a list of IP addresses of the ePDGs, and the list of IP addresses of the ePDGs includes IP addresses of at least one ePDG; establishing, by the terminal, the communication connection with the corresponding ePDG according to the IP address information of the ePDG includes: selecting, by the terminal, an IP address of a reachable ePDG from the list of IP addresses of the ePDG, and connecting to a corresponding ePDG according to the selected IP address of the ePDG, and establishing an Internet Protocol Security tunnel with the ePDG.

Optionally, the IP address information of the ePDG includes an IP address of a primary ePDG; establishing, by the terminal, the communication connection with the corresponding ePDG according to the IP address information of the ePDG includes: establishing, by the terminal, a communication connection with a corresponding primary ePDG according to the IP address of the primary ePDG; receiving, by the terminal, an IP address of a recommended ePDG transmitted by the primary ePDG; and establishing, by the terminal, a communication connection with a corresponding ePDG according to the IP address of the recommended ePDG.

In another aspect, an embodiment of the present disclosure further provides an LTE network communication device, including: an information setting module and an information transmitting module; wherein the information setting module is set to receive preset IP address information of an ePDG; and the information transmitting module is set to transfer the IP address information of the ePDG to a terminal through an LTE network, in order to establish, by the terminal, a communication connection with a corresponding ePDG according to the IP address information of the ePDG in a Wi-Fi network, and initiate a Wi-Fi voice service though the ePDG with which the communication connection has established.

Optionally, the LTE network communication device includes a mobility management entity, a serving gateway, or a packet data network gateway.

Optionally, the information transmitting module is set to transfer the IP address information of the ePDG to the terminal when the process of attaching to an LTE network, and/or creating a session, and/or modifying a session, and/or deleting a session, and/or a creating a bearer and/or modifying a bearer and/or deleting a bearer is performed by the terminal.

In another aspect, an embodiment of the present disclosure further provides a terminal, including an information receiving module and a service initiating module; wherein the information receiving module is set to receive IP address information of an ePDG transmitted from a LTE network communication device in a LTE network; and the service initiating module is set to establish a communication connection with a corresponding ePDG according to the IP address information of the ePDG in a Wi-Fi network, and initiate a Wi-Fi voice service though the ePDG with which the communication connection has established.

Optionally, the IP address information of the ePDG includes a list of IP addresses of the ePDGs, and the list of IP addresses of the ePDGs includes IP addresses of at least one ePDG; wherein the service initiating module is set to: select an IP address of a reachable ePDG from the list of IP addresses of the ePDGs, connect to a corresponding ePDG according to the selected IP address, and establish an Internet Protocol Security tunnel with the ePDG to realize establishment of the communication connection; and initiate the Wi-Fi voice service though the ePDG with which the communication connection has established.

Optionally, the IP address information of the ePDG includes the IP address of a primary ePDG; wherein the service initiating module is set to: establish a communication connection with a corresponding primary ePDG according to the IP address of the primary ePDG; receive an IP address of a recommended ePDG transmitted by the primary ePDG; establish a communication connection with a corresponding ePDG according to the IP address of the recommended ePDG; and initiate the Wi-Fi voice service though the ePDG with which the communication connection has established.

An embodiment of the present disclosure further provides a communication system, including the LTE network communication device as described above and the terminal as described above.

Compared with the existing art, aspects of the embodiments of the present disclosure includes: presetting the IP address information of an ePDG on the LTE network communication device; transferring, by the LTE network communication device, the IP address information of an ePDG to the terminal through a LTE network; establishing, by the terminal, a communication connection with the corresponding ePDG according to the IP address information of the ePDG previously transferred by the LTE network communication device in the Wi-Fi network, and initiating, by the terminal, the WI-FI voice service through the ePDG with which the communication connection has established. According to the method of embodiments of the present disclosure, the terminal does not need to rely on deployment of DNS devices, and it can discover the ePDN directly through the LTE network. This method is simple, and the efficiency of ePDG discovery is high, such that the attachment to the ePDG by the terminal can be accelerated and network deployment and configuration for the Wi-Fi voice service (i.e., the VoWiFi service) can be simplified.

Other aspects can be understood after reading and understanding the appended Figures and detailed description.

### BRIEF DESCRIPTION OF THE DRAWINGS

FIG. 1 is a schematic diagram of the network architecture of a communication system in an existing art;
FIG. 2 is a flowchart of a method for initiating a Wi-Fi voice service according to an embodiment of the present disclosure;
FIG. 3 is a flowchart of a method for initiating a Wi-Fi voice service according to another embodiment of the present disclosure;
FIG. 4 is a structural block diagram of an LTE network communication device according to an embodiment of the present disclosure;
FIG. 5 is a structural block diagram of a terminal according to an embodiment of the present disclosure;
FIG. 6 is a schematic flowchart of a method for initiating a Wi-Fi voice service provided by the application example 1 of the present disclosure;
FIG. 7 is a schematic flowchart of a terminal obtaining a list of IP addresses of ePDGs from a Packet Data Network Gateway during the process of attaching to an LTE network provided by the application example 2 of the present disclosure;
FIG. 8 is a schematic flowchart of a terminal obtaining the IP address of a primary ePDG from a Packet Data Network Gateway during the process of attaching to an LTE network provided by the application example 2 of the present disclosure;
FIG. 9 is a schematic flowchart of a terminal obtaining a list of IP addresses of ePDGs from a Serving Gateway during the process of attaching to an LTE network provided by the application example 2 of the present disclosure;
FIG. 10 is a schematic flowchart of a terminal obtaining an IP address of a primary ePDG from a Serving Gateway during the process of attaching to an LTE network provided by the application example 2 of the present disclosure;
FIG. 11 is a schematic flowchart of a terminal obtaining an list of IP addresses of ePDGs from a Mobility Management entity during the process of attaching to an LTE network provided by the application example 2 of the present disclosure;
FIG. 12 is a schematic flowchart of a terminal obtaining an IP address of a primary ePDG from a mobility management entity during the process of attaching to an LTE network provided by the application example 2 of the present disclosure;
FIG. 13 is a schematic diagram of an IP address field of an ePDG provided by the application example 2 of the present disclosure;
FIG. 14 is a schematic flowchart of a terminal obtaining a list of IP addresses of ePDGs from a Packet Data Network Gateway during a dedicated bearer activation process provided by the application example 3 of the present disclosure;
FIG. 15 is a schematic flowchart of a terminal obtaining a list of IP addresses of ePDGs from a Packet Data Network Gateway during a bearer modification (with bearer QoS update) process provided by the application example 4 of the present disclosure;
FIG. 16 is a schematic flowchart of a terminal obtaining a list of IP addresses of ePDGs from a Packet Data Network Gateway during a bearer modification (without bearer QoS updated) process provided by the application example 5 of the present disclosure;
FIG. 17 is a schematic flowchart of a terminal obtaining the list of IP addresses of ePDGs from a Packet Data Network Gateway in a bearer deactivation process provided by the application example 6 of the present disclosure.

### DETAILED DESCRIPTION

Hereinafter, the embodiments of the present disclosure will be described in detail with reference to the appended Figures. It is noted that embodiments in the present disclosure and features in the embodiments may be combined with each other arbitrarily if there is no conflict.

FIG. 2 is a method for initiating a Wi-Fi voice service according to the embodiment of the present disclosure. As illustrated in FIG. 2, the method includes the flowing steps.

At step 200: A Long Term Evolution (LTE) network communication device receives preset Internet Protocol (IP) address information of an evolved packet data gateway (ePDG).

Optionally, the LTE network communication device includes: a mobility management entity, a serving gateway, or a packet data network gateway.

At step 201, the LTE network communication device transfers the IP address information of the ePDG to a terminal through an LTE network, in order to establish, by the terminal, a communication connection with a corresponding ePDG according to the IP address information of the ePDG in a wireless fidelity (Wi-Fi) network, and initiates a Wi-Fi voice service though the ePDG with which the communication connection has established.

Optionally, the IP address information of the ePDG is transferred to the terminal by the LTE network communication device when the process of attaching to an LTE network, and/or creating a session, and/or modifying a session, and/or deleting a session, and/or a creating a bearer and/or modifying a bearer and/or deleting a bearer is performed by the terminal.

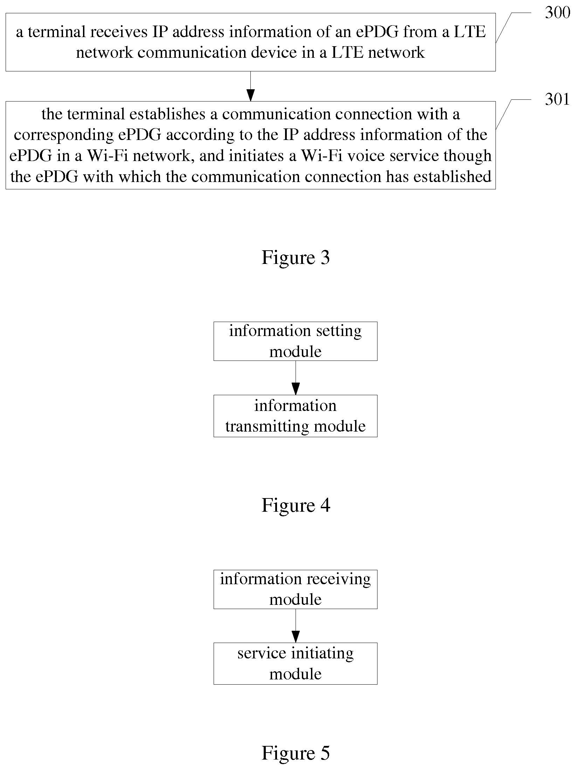

FIG. 3 is a method for initiating a Wi-Fi voice service according to another embodiment of the disclosure. As illustrated in FIG. 3, the method includes the flowing steps.

At step 300: a terminal receives IP address information of an ePDG from a LTE network communication device in a LTE network.

At step 301, the terminal establishes a communication connection with a corresponding ePDG according to the IP address information of the ePDG in a Wi-Fi network, and initiates a Wi-Fi voice service though the ePDG with which the communication connection has established.

Optionally, the IP address information of the ePDG includes a list of IP addresses of the ePDGs and the list of IP addresses of the ePDGs includes IP addresses of at least one ePDG. The establishment of the communication connection with the corresponding ePDG by the terminal according to the IP address information of the ePDG includes: the terminal selects an IP address of a reachable ePDG from the list of IP addresses of the ePDGs, connects to a corresponding ePDG according to the selected IP address of the ePDG, and establishes an Internet Protocol Security tunnel with the ePDG.

Optionally, the IP address information of the ePDG includes an IP address of a primary ePDG. The establishment of the communication connection with the corresponding ePDG by the terminal according to the IP address information of the ePDG includes: the terminal establishes a communication connection with a corresponding primary ePDG according to the IP address of the primary ePDG; the terminal receives an IP address of a recommended ePDG transmitted by the primary ePDG; and the terminal establishes a communication connection with a corresponding ePDG according to the IP address of the recommended ePDG.

An embodiment of the present disclosure further provides a computer storage medium having computer-executable instructions stored thereon. The computer-executable instructions are configured to execute the method for initiating the Wi-Fi voice service described above.

FIG. 4 is a structural block diagram of an LTE network communication device according to an embodiment of the present disclosure. As illustrated in FIG. 4, the LTE network communication device includes an information setting module and an information transmitting module; wherein the information setting module is set to receive IP address information of a preset ePDG; and the information transmitting module is set to transfer the IP address information of the ePDG to a terminal through an LTE network, in order to establish, by the terminal, a communication connection with a corresponding ePDG according to the IP address information of the ePDG in a Wi-Fi network, and initiate a Wi-Fi voice service though the ePDG with which the communication connection has established.

Optionally, the LTE network communication device includes a mobility management entity, a serving gateway, or a packet data network gateway.

Optionally, the information transmitting module is set to transfer the IP address information of the ePDG to the terminal when the process of attaching to an LTE network, and/or creating a session, and/or modifying a session, and/or deleting a session, and/or a creating a bearer and/or modifying a bearer and/or deleting a bearer is performed by the terminal.

FIG. 5 is a structural block diagram of a terminal according to an embodiment of the present disclosure. As illustrated in FIG. 5, the terminal includes an information receiving module and a service initiating module; wherein the information receiving module is set to receive IP address information of an ePDG transmitted from a LTE network communication device in a LTE network; and the service initiating module is set to establish a communication connection with a corresponding ePDG according to the IP address information of the ePDG in a Wi-Fi network, and initiate a Wi-Fi voice service though the ePDG with which the communication connection has established.

Optionally, the IP address information of the ePDG includes a list of IP addresses of the ePDGs, and the list of IP addresses of the ePDGs includes IP addresses of at least one ePDG; wherein the service initiating module is set to: select an IP address of a reachable ePDG from the list of IP addresses of the ePDGs, connect to a corresponding ePDG according to the selected IP address, and establish an Internet Protocol Security tunnel with the ePDG to realize establishment of the communication connection; and initiate the Wi-Fi voice service though the ePDG with which the communication connection has established.

Optionally, the IP address information of the ePDG includes the IP address of a primary ePDG; wherein the service initiating module is set to: establish a communication connection with a corresponding primary ePDG according to the IP address of the primary ePDG; receive an IP address of a recommended ePDG transmitted by the primary ePDG; establish a communication connection with a corresponding ePDG according to the IP address of the recommended ePDG; and initiate the Wi-Fi voice service though the ePDG with which the communication connection has established.

The embodiment of the present disclosure further includes a communication system. The communication system includes the LTE network communication device as described above and the terminal as described above.

Hereinafter, the method of the embodiments of the present disclosure will be described clearly and specifically through specific application examples. The application examples are merely used to describe the embodiments of the present disclosure, and are not used to limit the scope of the present disclosure.

### Application Example 1

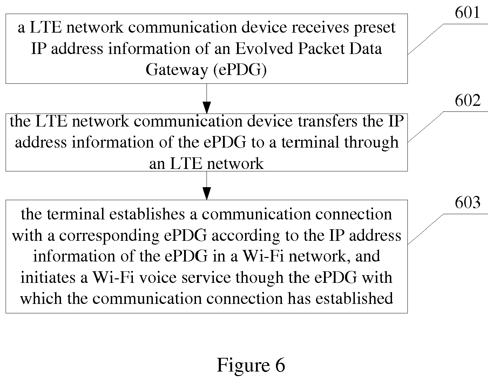

This application example first sets the IP address information of an ePDG on the LTE network communication device; then, the LTE network communication device transmits the IP address information of the ePDG to the terminal through the LTE network. When the terminal is attached to a Wi-Fi network and needs to initiate a Wi-Fi voice service (i.e., a VoWiFi service), a communication connection is established with the corresponding ePDG according to the IP address information of the ePDG previously transmitted by the LTE network communication device, and then, the Wi-Fi voice service is initiated through the ePDG with which the communication connection has established. Therefore, the terminal in this application example does not rely on the deployment of DNS devices, and can discover the ePDN directly through the LTE network. That is, the implementation is simple, and the efficiency of ePDG discovery is high, such that the attachment to the ePDG by the terminal can be accelerated and network deployment for the Wi-Fi voice service can be more open. The process is illustrated in Fig. 6, and includes the following steps.

At step 601, a LTE network communication device receives preset IP address information of an evolved packet data gateway (ePDG). Here, the IP address information of the ePDG may be set by a user.

In this embodiment of the present disclosure, the LTE network device may receive, via an information setting module thereof, the preset IP address information of an ePDG.

At step 602, the LTE network communication device transfers the IP address information of the ePDG to a terminal through an LTE network. The LTE network communication device may transfer, via an information transmitting module thereof, the IP address information of the ePDG to a terminal through an LTE network.

At step 603, the terminal establishes a communication connection with a corresponding ePDG according to the IP address information of the ePDG in a Wi-Fi network, and initiates a Wi-Fi voice service though the ePDG.

In this application example, the terminal includes an information receiving module and a service initiating module, wherein the information receiving module is set to receive IP address information of an ePDG transmitted from a LTE network communication device in a LTE network, and the service initiating module is set to establish a communication connection with a corresponding ePDG according to the IP address information of the ePDG in a Wi-Fi network, and initiate a Wi-Fi voice service though the ePDG with which the communication connection has established.

In this embodiment, the LTE network communication device may be a Mobility Management Entity (MME), a Serving GW, or Packet Data Network Gateway (PDN GW). Of course, other communication devices in the LTE network may also be used to configure and transfer the IP address of an ePDG to a terminal through an LTE network. Moreover, in this embodiment, the LTE network communication device transfer the IP address information of the ePDG to the terminal when the process of attaching to an LTE network, creating a session (including establishing a PDN connection, establishing a PDP (Packet Data Protocal) connection), modifying a session, deleting a session, a creating a bearer, modifying a bearer or deleting a bearer is performed by the terminal.

The IP address information of the ePDG configured at the step 601 may be information in the form of a list of IP addresses of the ePDGs. The list of IP addresses of the ePDGs comprise IP addresses of at least one ePDG, and the IP addresses of the ePDGs included are reachable by both of the terminal and PDN GW path. The specific number and content of the IP addresses configured in the list of IP addresses of the ePDG may be determined based on specific circumstance of networking. When multiple IP addresses of ePDG are included, the multiple IP addresses may be configured with different priorities for subsequent selection by terminals.

In this case, the establishment, by the service initiating module of the terminal, of the communication connection with the corresponding ePDG according to the received IP address information of the ePDG at the step 603 includes:
selecting an IP address of a reachable ePDG from the received list of IP addresses of the ePDG, connecting to a corresponding ePDG according to the selected IP address of the ePDG, and establishing an Internet Protocol Security tunnel (i.e., IPSec tunnel) with the ePDG. Then, authenticating with the 3GPP AAA Server through the ePDG with which the communication has established, and establishing a GPRS tunneling protocol (GTP) tunnel or Proxy Mobile IP (PMIP) tunnel with the PDN GW through the ePDG, in order to achieve access to LTE core network and VoWiFi and VoLTE interworking.

In this embodiment, the terminal can select an IP address of a reachable ePDG from the received list of IP addresses of the ePDGs through the service initiating module. When the IP addresses of each ePDG in the list of IP addresses of the ePDGs are configured with different priorities, the IP addresses of the reachable ePDGs may be selected from the list of IP addresses of the ePDGs in a descending order of priority.

The IP address information of the ePDG configured at step 601 may also include the IP address of the primary ePDG. In this case, the establishment, by the service initiating module, of the communication connection with the corresponding ePDG according to the IP address information of the ePDG in the Wi-Fi network at the step 603 includes:
establishing a communication connection with a corresponding primary ePDG according to the IP address of the primary ePDG; recommending, by the primary ePDG, to the terminal other reachable ePDGs (hereinafter referred to as the recommended ePDGs); receiving the IP addresses of the recommended ePDGs transmitted by the primary ePDG; and establishing a communication connection with a corresponding ePDG according to the IP addresses of the recommended ePDGs, and establishing an Internet Protocol Security tunnel with the recommended ePDG. Then, authenticating with the 3GPP AAA Server through the ePDG with which the communication has established, and establishing a GTP tunnel or PMIP tunnel with the PDN GW through the recommended ePDG, in order to achieve access to LTE core network and VoWiFi and VoLTE interworking.

### Application Example 2

In this application, by way of example, the present disclosure is further exemplified by taking the LTE network communication device as an MME, a Serving Gateway, or a Packet Data Network Gateway, and by taking the process of attaching the LTE network to the terminal as an example. In order to make the diagram concise, network elements for forwarding and related scenarios, such as roaming, handover, idle (Idle), etc., that have no effect on the transmission of key parameters are omitted in respective diagrams of this application example, but it should be understood that these may exist in actual environment. Several application scenarios are taken as an example for further illustration below.

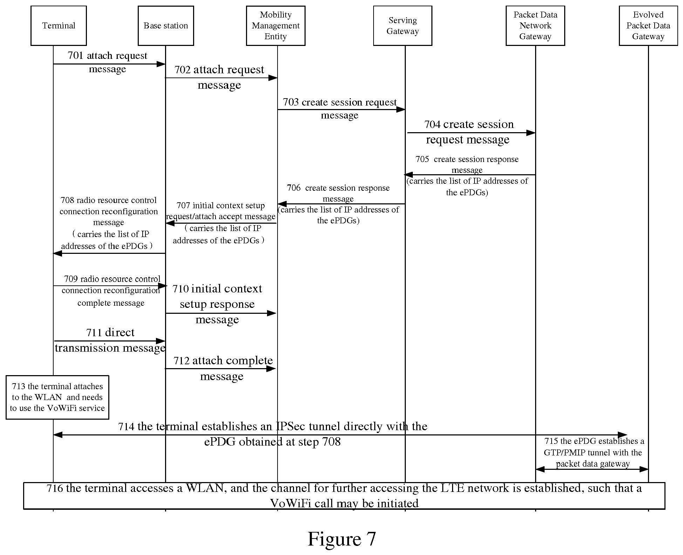

As shown in FIG. 7, the process of the terminal UE obtaining the IP address information of the ePDG (in the present embodiment, take the list of IP addresses of the ePDG as an example) from the Packet Data Network Gateway (that is, the IP address information of the ePDG is configured on the Packet Data Network Gateway) during the process of attaching to the LTE network includes the following steps.

At step 701, the terminal initiates an attach request message to the base station.

At step 702, the base station initiates an attach request message to a mobility management entity.

At step 703, the mobility management entity transmits a create session request message to the serving gateway.

At step 704, the serving gateway transmits a create session request message to the packet data network gateway.

At step 705, the packet data network gateway transmits a create session response message to the serving gateway, and a list of IP addresses of ePDGs configured on the packet data network gateway is carried in the message.

At step 706, the serving gateway transmits a create session response message to the mobility management entity, and the list of IP addresses of ePDGs delivered by the packet data network gateway at step 705 is carried in the message.

At step 707, the mobility management entity transmits an initial context setup request and/or attach accept message to the base station, and the list of IP addresses of the ePDGs delivered by the serving gateway at step 706 is carried in the attach accept message;
At step 708, the base station transmits a radio resource control connection reconfiguration message to the terminal, and the radio resource control connection reconfiguration message includes the list of IP addresses of ePDGs delivered by the mobility management entity at step 707.

At step 709, the terminal transmits a radio resource control connection reconfiguration complete message to the base station.

At step 710, the base station transmits an initial context setup response message to the mobility management entity.

At step 711, the terminal transmits a direct transmission message to the base station.

At step 712, the base station transmits an attach complete message to the mobility management entity.

At step 713, the terminal attaches to the WLAN network and needs to use the VoWiFi service.

At step 714, the terminal establishes an IPSec tunnel directly with the ePDG obtained at step 708. The list of IP addresses of ePDGs is obtained at step 708, wherefrom the terminal selects a reachable ePDG to establish an IPSec tunnel.

At step 715, the ePDG establishes a GTP or PMIP tunnel with the packet data network gateway.

At step 716, the terminal accesses a WLAN, and the channel for further accessing the LTE network is established, such that a VoWiFi call may be initiated.

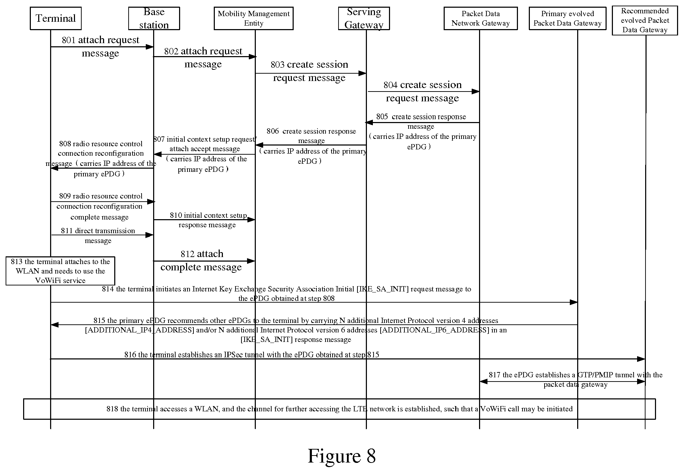

As shown in FIG. 8, the process of the terminal UE obtaining the IP address information of the ePDG (in this embodiment, take a single ePDG as an example, that is, take the IP address of the primary ePDG as an example) from the packet data network gateway (that is, the IP address information of the ePDG is configured on the packet data network gateway) during the process of attaching to the LTE network includes the following steps.

At step 801, the terminal initiates an attach request message to the base station.

At step 802, the base station initiates an attach request message to a mobility management entity.

At step 803, the mobility management entity transmits a create session request message to the serving gateway.

At step 804, the serving gateway transmits a create session request message to the packet data network gateway.

At step 805, the packet data network gateway transmits a create session response message to the serving gateway, and the IP address of the primary ePDG configured on the packet data network gateway is carried in the message.

At step 806, the serving gateway transmits a create session response message to the mobility management entity, and the IP address of the primary ePDG delivered by the packet data network gateway at step 805 is carried in the create session response message.

At step 807, the mobility management entity transmits an initial context setup request/attach accept message to the base station, and the IP address of the primary ePDG delivered by the serving gateway at step 406 is carried in the attached accept message.

At step 808, the base station transmits a radio resource control connection reconfiguration message to the terminal, and the radio resource control connection reconfiguration message includes the IP address of the primary ePDG delivered by the mobility management entity at step 807.

At step 809, the terminal transmits a radio resource control connection reconfiguration complete message to the base station.

At step 810, the base station transmits an initial context setup response message to the mobility management entity.

At step 811, the terminal transmits a direct transmission message to the base station.

At step 812, the base station transmits an attached complete message to the mobility management entity.

At step 813, the terminal attaches to the WLAN network, and needs to use the VoWiFi service.

At step 814, the terminal establishes an IPSec tunnel directly with the primary ePDG corresponding to the IP address of the primary ePDG obtained at step 808.

At step 815, the primary ePDG recommends other ePDGs to the terminal by carrying N additional Internet Protocol version 4 addresses (ADDITIONAL_IP4_ADDRESS, including IP address information of the recommended ePDGs) and/or N additional Internet Protocol version 6 addresses (ADDITIONAL_IP6_ADDRESS, including the IP address information of the recommended ePDGs) in an Internet Key Exchange Security Association Initial (IKE_SA_INIT) response message.

At step 816, the terminal establishes an IPSec tunnel with the recommended ePDG address recommended at step 815.

At step 817, the recommend ePDG establishes a GTP or PMIP tunnel with the packet data network gateway.

At step 818, the terminal accesses a WLAN, and the channel for further accessing the LTE network is established, such that a VoWiFi call may be initiated.

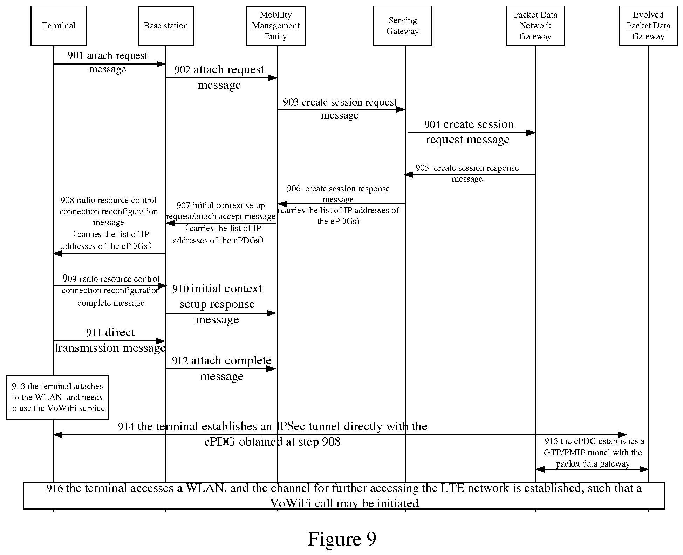

As shown in FIG. 9, the process of the terminal UE obtaining the IP address information of the ePDG (in the present embodiment, take the list of IP addresses of the ePDGs as an example) from the serving gateway (that is, the IP address information of the ePDG configured on the serving gateway) during the process of attaching to the LTE network includes the following steps.

At step 901, the terminal initiates an attach request message to a base station.

At step 902, the base station initiates an attach request message to a mobility management entity.

At step 903, the mobility management entity transmits a create session request message to the serving gateway.

At step 904, the serving gateway transmits a create session request message to the packet data network gateway.

At step 905, the packet data network gateway transmits a create session response message to the serving gateway.

At step 906, the serving gateway transmits a create session response message to the mobility management entity, and a list of IP addresses of the ePDGs configured on the serving gateway is carried in the message.

At step 907, the mobility management entity transmits an initial context setup request/attach accept message to the base station, and a list of IP addresses of the ePDGs delivered by the serving gateway at step 906 is carried in the attached accept message.

At step 908, the base station transmits the radio resource control connection reconfiguration message to the terminal, and the list of IP addresses of the ePDGs delivered by the mobility management entity at step 907 is included in the radio resource control connection reconfiguration message. At step 909, the terminal transmits a radio resource control connection reconfiguration complete message to the base station.

At step 910, the base station transmits an initial context setup response message to the mobility management entity.

At step 911, the terminal transmits a direct transmission message to the base station.

At step 912, the base station transmits an attached complete message to the mobility management entity.

At step 913, the terminal attaches to the WLAN network, and needs to use the VoWiFi service.

At step 914, the terminal establishes an IPSec tunnel directly with the ePDG obtained at step 908. The list of IP addresses of the ePDGs is obtained at step 908, wherefrom the terminal selects a reachable ePDG to establish an IPSec tunnel.

At step 915, the ePDG establishes a GTP or PMIP tunnel with the packet data network gateway.

At step 916, the terminal accesses a WLAN, and the channel for further accessing the LTE network is established, such that a VoWiFi call may be initiated.

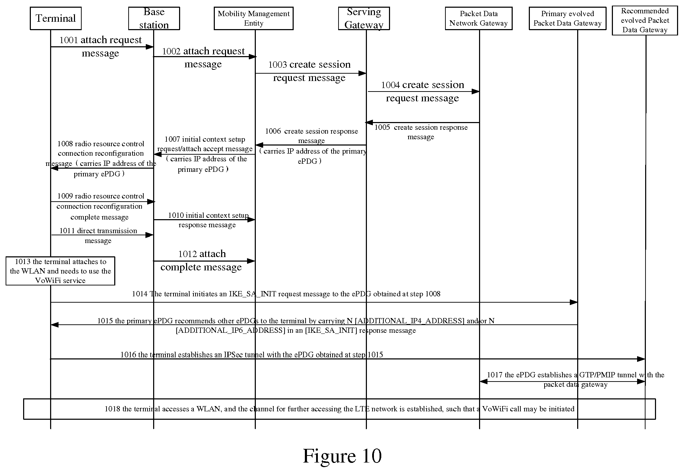

As shown in FIG. 10, the process of the terminal UE obtaining the IP address information of the ePDG (in this embodiment, take a single ePDG as an example, that is, take the IP address of the primary ePDG as an example) from the serving gateway (that is, the IP address information of the ePDG configured on the serving gateway) during the process of attaching to the LTE network includes the following steps.

At step 1001, the terminal initiates an attach request message to the base station.

At step 1002, the base station initiates an attach request message to a mobility management entity.

At step 1003, the mobility management entity transmits a create session request message to the serving gateway.

At step 1004, the serving gateway transmits a create session request message to the packet data network gateway.

At step 1005, the packet data network gateway transmits a create session response message to the serving gateway.

At step 1006, the serving gateway transmits a create session response message to the mobility management entity, and the IP address of the primary ePDG configured on the serving gateway is carried in the message.

At step 1007, the mobility management entity transmits an initial context setup request/attach accept message to the base station, and the IP address of the primary ePDG delivered by the serving gateway at step 1006 is carried in the attached accept message.

At step 1008, the base station transmits a radio resource control connection reconfiguration message to the terminal, and the IP address of the primary ePDG delivered by the mobility management entity at step 1007 is included in the radio resource control connection reconfiguration message.

At step 1009, the terminal transmits a radio resource control connection reconfiguration complete message to the base station.

At step 1010, the base station transmits an initial context setup response message to the mobility management entity.

At step 1011, the terminal transmits a direct transmission message to the base station.

At step 1012, the base station transmits an attached complete message to the mobility management entity.

At step 1013, the terminal attaches to the WLAN network, and needs to use the VoWiFi service.

At step 1014, the terminal establishes an IPSec tunnel directly with the primary ePDG obtained at step 1008.

At step 1015, the primary ePDG recommends other ePDGs to the terminal by carrying N (ADDITIONAL_{_}IP4_ADDRESS, including IP address information of the recommended ePDGs) and/or N (ADDITIONAL_IP6_ADDRESS, including the IP address information of the recommended ePDGs) in an IKE_SA_INIT response message.

At step 1016, the terminal establishes an IPSec tunnel with the recommended ePDG address recommended at step 1015.

At step 1017: the recommend ePDG establishes a GTP or PMIP tunnel with the packet data network gateway.

At step 1018, the terminal accesses a WLAN, and the channel for further accessing the LTE network is established, such that a VoWiFi call may be initiated.

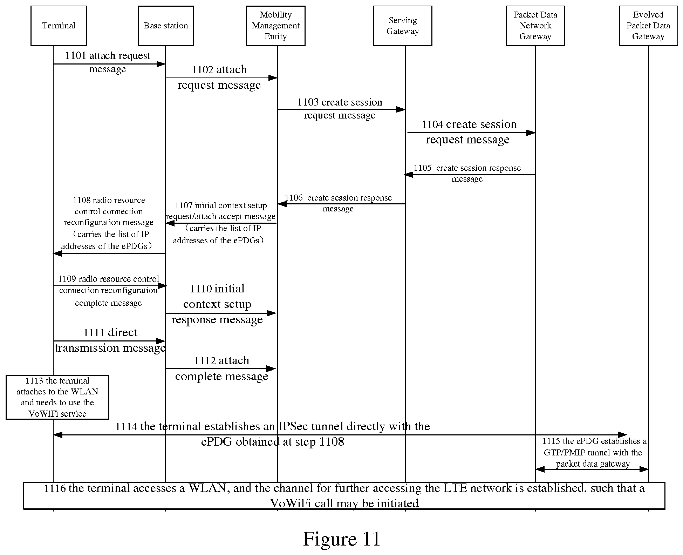

As shown in FIG. 11, the process of the terminal UE obtaining the IP address information of the ePDG (in the present embodiment, take the list of IP addresses of the ePDGs as an example) from the mobility management entity (that is, the IP address information of the ePDGs configured on the mobility management entity) during the process of attaching to the LTE network includes the following steps.

At step 1101, the terminal initiates an attach request message to a base station.

At step 1102, the base station initiates an attach request message to a mobility management entity.

At step 1103, the mobility management entity transmits a create session request message to the serving gateway.

At step 1104, the serving gateway transmits a create session request message to the packet data network gateway.

At step 1105, the packet data network gateway transmits a create session response message to the serving gateway.

At step 1106, the serving gateway transmits a create session response message to the mobility management entity.

At step 1107, the mobility management entity transmits an initial context setup request/attach accept message to the base station, and a list of IP addresses of the ePDG configured on the mobility management entity is carried in the attached accept message.

At step 1108, the base station transmits a radio resource control connection reconfiguration message to the terminal, and the list of IP addresses of the ePDG delivered by the mobility management entity at step 1107 is included in the radio resource control connection reconfiguration message.

At step 1109, the terminal transmits a radio resource control connection reconfiguration complete message to the base station.

At step 1110, the base station transmits an initial context setup response message to the mobility management entity.

At step 1111, the terminal transmits a direct transmission message to the base station.

At step 1112, the base station transmits an attached complete message to the mobility management entity.

At step 1113, the terminal attaches to the WLAN network, and needs to use the VoWiFi service.

At step 1114, the terminal establishes an IPSec tunnel directly with the ePDG obtained at step 1108. If the list of IP addresses of the ePDGs is obtained at step 1108, then the terminal selects a reachable ePDG from the list to establish an IPSec tunnel.

At step 1115, the ePDG establishes a GTP or PMIP tunnel with the packet data network gateway.

At step 1116, the terminal accesses a WLAN, and the channel for further accessing the LTE network is established, such that a VoWiFi call may be initiated.

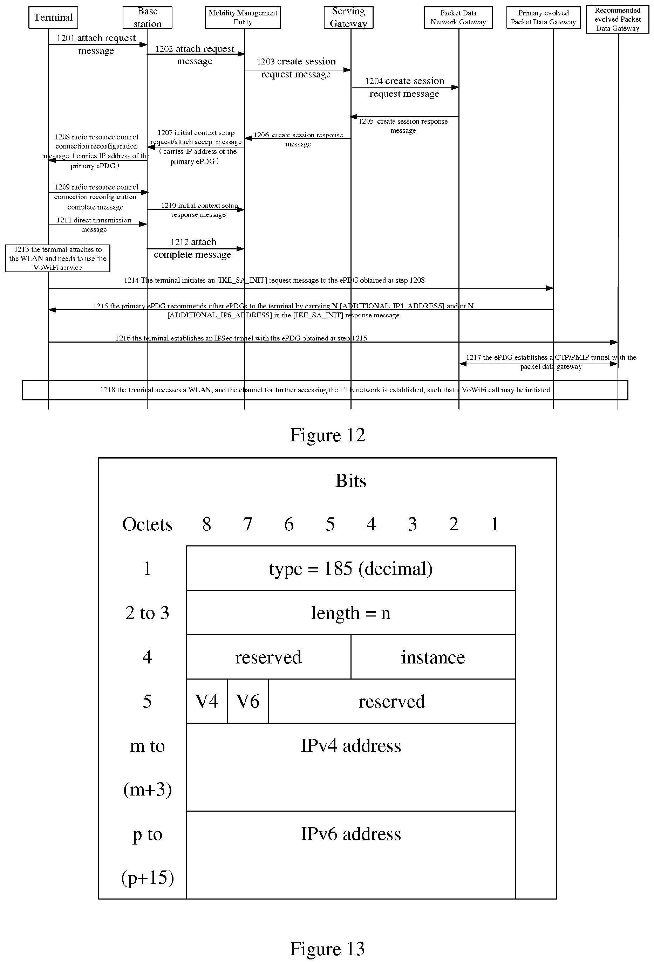

As shown in FIG. 12, the process of the terminal UE obtaining the IP address information of the ePDG (in this embodiment, take a single ePDG as an example, that is, take the IP address of the primary ePDG as an example) from the mobility management entity (that is, the IP address information of the ePDG configured on the mobility management entity) during the process of attaching to the LTE network includes the following steps.

At step 1201, the terminal initiates an attach request message to the base station.

At step 1202, the base station initiates an attach request message to the mobility management entity.

At step 1203, the mobility management entity transmits a create session request message to the serving gateway.

At step 1204, the serving gateway transmits a create session request message to the packet data network gateway.

At step 1205, the packet data network gateway transmits a create session response message to the serving gateway.

At step 1206, the serving gateway transmits a create session response message to the mobility management entity.

At step 1207, the mobility management entity transmits an initial context setup request/attach accept message to the base station, and the IP address of the primary ePDG configured on the mobility management entity is carried in the attached accept message.

At step 1208, the base station transmits a radio resource control connection reconfiguration message to the terminal, and the IP address of the primary ePDG delivered by the mobility management entity at step 1207 is included in the radio resource control connection reconfiguration message. At step 1209, the terminal transmits a radio resource control connection reconfiguration complete message to the base station.

At step 1210, the base station transmits an initial context setup response message to the mobility management entity.

At step 1211, the terminal transmits a direct transmission message to the base station.

At step 1212, the base station transmits an attached complete message to the mobility management entity.

At step 1213, the terminal attaches to the WLAN network, and needs to use the VoWiFi service.

At step 1214, the terminal directly establishes an IPSec tunnel with the IP of the primary ePDG obtained at step 1208.

At step 1215, the primary ePDG recommends other ePDGs to the terminal by carrying N (ADDITIONAL_IP4_ADDRESS, including IP address information of the recommended ePDGs) and/or N (ADDITIONAL_IP6_ADDRESS, including the IP address information of the recommended ePDGs) in the IKE_SA_INIT response message.

At step 1216, the terminal establishes an IPSec tunnel with the recommended ePDG address recommended at step 1215.

At step 1217: the recommend ePDG establishes a GTP or PMIP tunnel with the packet data network gateway;

At step 1218, the terminal accesses a WLAN, and the channel for further accessing the LTE network is established, such that a VoWiFi call may be initiated.

As shown in FIG. 13, an embodiment of a packet data network gateway delivering a field for IP address of the ePDG is illustrated.

In the above embodiment, the "IP address of the ePDG" field does not exist in existing standards. Based on the 3GPP protocol, a definition of this field in the GTP message is given. Please refer to Table 1:

**Table 1**

| Values for information element type (decimal) | Information element name | Applicable reference points | Information element description |
|---|---|---|---|
| 185 | ePDG-IP-Address | S5/S8 | Used for delivering ePDG IP addresses to UE in a LTE network |
| | | S11 | |
| | | S1-MME | |
| | | LTE-Uu | |

The definition of the ePDG IP address is shown in Figure 13.

Optionally, where the definition of the "ePDG IP address" is given in the above example, the following values can be defined.

The meaning of octet 5 is as follows:
- Bit 8 V4: If this bit is set to 1, this information element contains a IPv4 address, otherwise the IPv4 address would not occur.
- Bit 7 V6: If this bit is set to 1, the information element contains a IPv6 address, otherwise the IPv6 address would not occur.

At least one of the above V4 and V6 identifiers may be set, or both of them may be set.

The octets "m to (m+3)" and/or "p to (p+15)" (IPv4 address/IPv6 address field) (if it/they occur(s)), contain corresponding address(es).

If the PMIP protocol is used instead of the GTP protocol between the ePDG and the PGW, the function of this field also applies.

The process of creating a session is already included in the processes of FIG. 6 to FIG. 11, such as steps 603 to 606 of FIG. 6. Referring to the above processes, the IP address of the ePDG may be transferred to a terminal during the process of creating a session. Alternatively, the IP address of the ePDG may also be transferred to a terminal during the process of modifying a session or deleting a session after the session is created, which will not be described here.

### Application Example 3

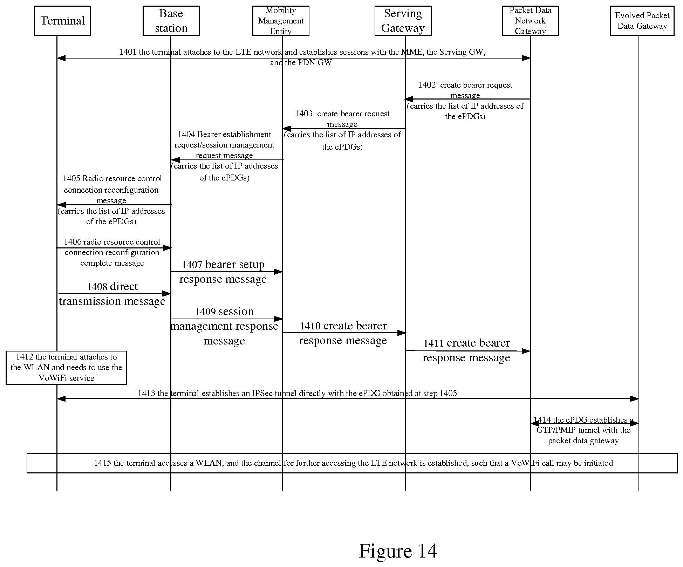

By way of example, this embodiment is exemplified by taking the LTE network communication device as a Mobility Management Entity (MME), a Serving GW, or a Packet data network gateway (PDN GW), and by taking transferring the IP address of the ePDG to a terminal in the process of dedicated bearer activation (that is, bearer creation) as an example. Refer to FIG. 14, which includes the following steps.

At step 1401, the terminal attaches to the LTE network and establishes sessions with the MME, the Serving GW, and the PDN GW.

At step 1402, the packet data network gateway transmits a create bearer request message to the serving gateway, and the list of IP addresses of the ePDGs configured on the packet data network gateway is carried in the message.

At step 1403, the serving gateway transmits the create bearer request message to the mobility management entity, and the list of IP addresses of the ePDGs delivered by the packet data network gateway at step 1402 is carried in the create bearer request message.

At step 1404, the mobility management entity transmits a bearer establishment request/session management request message to the base station, and a list of IP addresses of the ePDGs delivered by the serving gateway at step 1403 is carried in the session management request message.

At step 1405, the base station transmits a radio resource control connection reconfiguration message to the terminal, and the radio resource control connection reconfiguration message includes the list of IP addresses of the ePDGs delivered by the mobility management entity at step 1404.

At step 1406, the terminal transmits a radio resource control connection reconfiguration complete message to the base station.

At step 1407, the base station transmits a bearer setup response message to the mobility management entity.

At step 1408, the terminal transmits a direct transmission message to the base station.

At step 1409, the base station transmits a session management response message to the mobility management entity.

At step 1410, the mobility management entity transmits a create bearer response message to the serving gateway.

At step 1411, the serving gateway transmits a create bearer response message to the packet data network gateway;

At step 1412, the terminal attaches to the WLAN network, and needs to use the VoWiFi service.

At step 1413, the terminal establishes an IPSec tunnel directly with the ePDG obtained at step 1405. The list of IP addresses of the ePDGs is obtained at step 1405, wherefrom the terminal selects a reachable ePDG to establish an IPSec tunnel.

At step 1414, the ePDG establishes a GTP or PMIP tunnel with the packet data network gateway.

At step 1415, the terminal accesses a WLAN, and the channel for further accessing the LTE network is established, such that a VoWiFi call may be initiated.

The above example is described by taking obtaining the list of IP addresses of the ePDGs and configuring it on the packet data network gateway as an example. The process of obtaining the IP address of the primary ePDG and configuring the IP address information in other communication devices (such as the serving gateway or the MME) is described in application example 1 and thus will not be described here.

### Application example 4

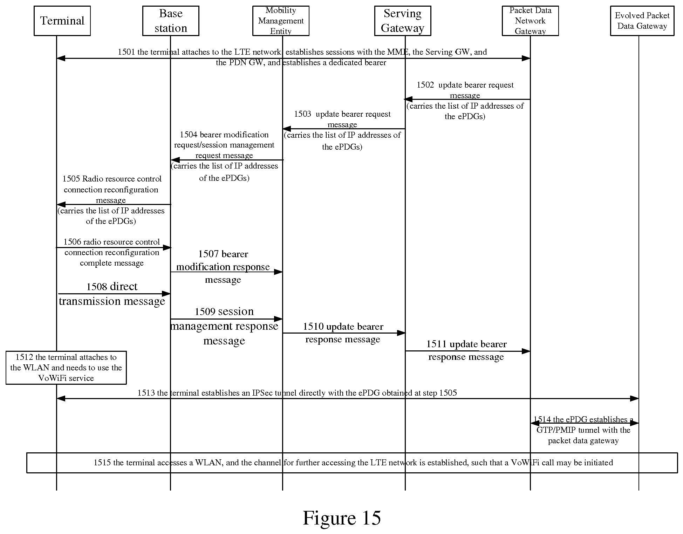

By way of example, this embodiment is exemplified by taking the LTE network communication device as a Mobility Management Entity (MME), a Serving GW, or a Packet data network gateway (PDN GW), and by taking transferring the IP address of the ePDG to a terminal in the process of bearer modification (with bear QoS update) as an example. Refer to FIG. 15, which includes the following steps.

At step 1501, the terminal attaches to the LTE network, establishes sessions with the MME, the Serving GW, and the PDN GW, and establishes a dedicated bearer.

At step 1502, the packet data network gateway transmits an update bearer request message to the serving gateway, and a list of IP addresses of the ePDG configured on the packet data network gateway is carried in the message.

At step 1503, the serving gateway transmits an update bearer request message to the mobility management entity, and the list of IP addresses of the ePDG delivered by the packet data network gateway at step 1502 is carried in the message.

At step 1504, the mobility management entity transmits a bearer modification request/session management request message to the base station, and a list of IP addresses of the ePDG delivered by the serving gateway at step 1503 is carried in the session management request message.

At step 1505, the base station transmits a radio resource control connection reconfiguration message to the terminal, and the radio resource control connection reconfiguration message includes the list of IP addresses of the ePDGs delivered by the mobility management entity at step 1504.

At step 1506, the terminal transmits a radio resource control connection reconfiguration complete message to the base station.

At step 1507, the base station transmits a bearer modification response message to the mobility management entity.

At step 1508, the terminal transmits a direct transmission message to the base station.

At step 1509, the base station transmits a session management response message to the mobility management entity.

At step 1510, the mobility management entity transmits an update bearer response message to the serving gateway.

At step 1511, the serving gateway transmits an update bearer response message to the packet data network gateway.

At step 1512, the terminal attaches to the WLAN network and needs to use the VoWiFi service.

At step 1513, the terminal establishes an IPSec tunnel directly with the ePDG obtained at step 1505. The list of IP addresses of the ePDGs is obtained at step 1505, wherefrom the terminal selects a reachable ePDG to establish an IPSec tunnel.

At step 1514, the ePDG establishes a GTP or PMIP tunnel with the packet data network gateway.

At step 1515, the terminal accesses a WLAN, and the channel for further accessing the LTE network is established, such that a VoWiFi call may be initiated.

The above example is described by taking obtaining the list of IP addresses of the ePDG and configuring it on the packet data network gateway as an example. The process of obtaining the IP address of the primary ePDG and configuring the IP address information in other communication devices (such as the serving gateway or the MME) is described in application example 1 and thus will not be described here.

### Application example 5

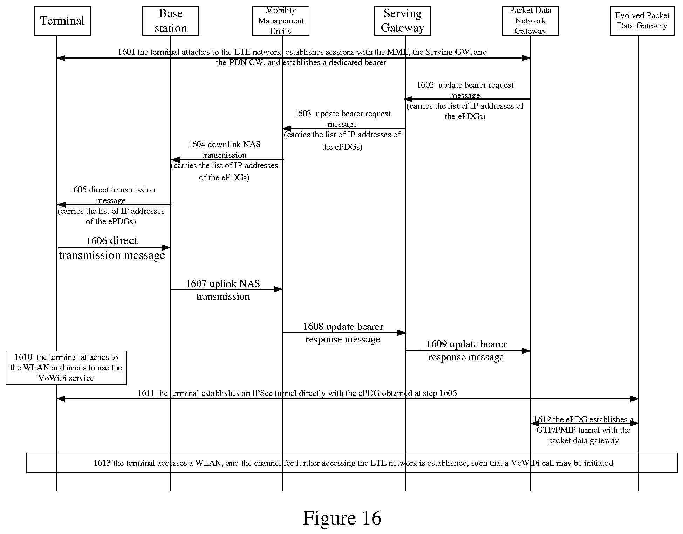

By way of example, this embodiment is exemplified by taking the LTE network communication device as a Mobility Management Entity (MME), a Serving GW, or a Packet data network gateway (PDN GW), and by taking transferring the IP address of the ePDG to a terminal in the process of bearer modification (without bear QoS update) as an example. Refer to FIG. 16, which includes the following steps.

At step 1601, the terminal attaches to the LTE network, establishes sessions with the MME, the Serving GW, and the PDN GW, and establishes a dedicated bearer.

At step 1602, the packet data network gateway transmits an update bearer request message to the serving gateway, and the list of IP addresses of the ePDG configured on the packet data network gateway is carried in the message.

At step 1603, the serving gateway transmits an update bearer request message to the mobility management entity, and a list of IP addresses of the ePDG delivered by the packet data network gateway at step 1602 is carried in the message.

At step 1604, the mobility management entity transmits a downlink NAS transmission message to the base station, and the list of IP addresses of the ePDG delivered by the serving gateway at step 1603 is carried in the downlink NAS transmission message.

At step 1605, the base station transmits a direct transmission message to the terminal, and the direct transmission message includes the list of IP addresses of the ePDG delivered by the mobility management entity at step 1204.

At step 1606, the terminal transmits a direct transmission message to the base station.

At step 1607, the base station transmits an uplink NAS transmission message to the mobility management entity.

At step 1608, the mobility management entity transmits an update bearer response message to the serving gateway.

At step 1609, the serving gateway transmits an update bearer response message to the packet data network gateway.

At step 1610, the terminal attaches to the WLAN network and needs to use the VoWiFi service.

At step 1611, the terminal establishes an IPSec tunnel directly with the ePDG obtained at step 1605. The list of IP addresses of the ePDGs is obtained at step 1605, wherefrom the terminal selects a reachable ePDG to establish an IPSec tunnel.

At step 1612, the ePDG establishes a GTP or PMIP tunnel with the packet data network gateway.

At step 1613, the terminal accesses a WLAN, and the channel for further accessing the LTE network is established, such that a VoWiFi call may be initiated.

The above example is described by taking obtaining the list of IP addresses of the ePDGs and configuring it on the packet data network gateway as an example. The process of obtaining the IP address of the primary ePDG and configuring the IP address information in other communication devices (such as the serving gateway or the MME) is described in application example 1 and thus will not be described here.

### Application example 6

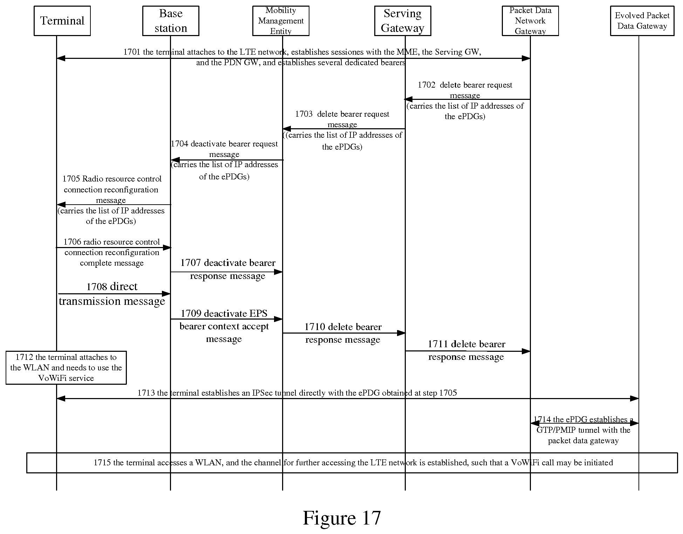

By way of example, this embodiment is exemplified by taking the LTE network communication device as a Mobility Management Entity (MME), a Serving GW, or a Packet data network gateway (PDN GW), and by taking transferring the IP address of the ePDG to a terminal in the process of bearer deactivation as an example. Refer to FIG. 17, which includes the following steps.

At step 1701, the terminal attaches to the LTE network, establishes sessions with the MME, the Serving GW, and the PDN GW, and establishes several dedicated bearers.

At step 1702, the packet data network gateway transmits a delete bearer request message to the serving gateway to deletes one bearer, and a list of IP addresses of ePDGs configured on the packet data network gateway is carried in the message.

At step 1703, the serving gateway transmits a delete bearer request message to the mobility management entity, and the list of IP addresses of ePDGs delivered by the packet data network gateway at step 1702 is carried in the message.

At step 1704, the mobility management entity transmits a deactivate bearer request message to the base station, and a list of IP addresses of the ePDGs delivered by the serving gateway at step 1703 is carried in the deactivate bearer request message.

At step 1705, the base station transmits a radio resource control connection reconfiguration message to the terminal, and the radio resource control connection reconfiguration message includes the list of IP addresses of the ePDGs delivered by the mobility management entity at step 1704.

At step 1706, the terminal transmits a radio resource control connection reconfiguration complete message to the base station.

At step 1707, the base station transmits a deactivate bearer response message to the mobility management entity.

At step 1708, the terminal transmits a direct transmission message to the base station.

At step 1709, the base station transmits a deactivate EPS bearer context accept message to the mobility management entity.

At step 1710, the mobility management entity transmits a delete bearer response message to the serving gateway.

At step 1711, the serving gateway transmits a delete bearer response message to the packet data network gateway.

At step 1712, the terminal attaches to the WLAN network and needs to use the VoWiFi service.

At step 1713, the terminal establishes an IPSec tunnel directly with the ePDG obtained at step 1705. The list of IP addresses of the ePDGs is obtained at step 1705, wherefrom the terminal selects a reachable ePDG to establish an IPSec tunnel.

At step 1714, the ePDG establishes a GTP or PMIP tunnel with the packet data network gateway.

At step 1715, the terminal accesses a WLAN, and the channel for further accessing the LTE network is established, such that a VoWiFi call may be initiated.

The above example is described by taking obtaining the list of IP addresses of the ePDG and configuring it on the packet data network gateway as an example. The process of obtaining the IP address of the primary ePDG and configuring the IP address information in other communication devices (such as the serving gateway or the MME) is described in application example 1 and thus will not be described here.

A person of ordinary skill in the art can understand that all or part of the steps in the above method can be implemented by instructing related hardware (e.g., a processor) via a program. The program can be stored in a computer-readable storage medium such as a read-only memory, a magnetic disk, or a compact disk. Optionally, all or some of the steps of the above embodiments may also be implemented by using at least one integrated circuit. Accordingly, each module/unit in the above embodiments may be implemented in the form of hardware, such as achieving corresponding functions through integrated circuits, or may be implemented in the form of software, such as achieving corresponding functions through execution of programs/instructions stored in a memory by a processor. The disclosure is not limited to any specific form of combination of hardware and software.

Although the embodiments disclosed in the present application are as described above, the contents described are merely embodiments for facilitating understanding of the present application, and are not intended to limit the present application (such as, a specific implementation method in the embodiments of the present disclosure). Though any one of those skilled in the art may perform any modifications and changes in the form and details of the implementation without departing from the spirit and scope disclosed herein, the scope of the present application is defined by the attached claims.

## Claims

1. A method for initiating a Wireless Fidelity (Wi-Fi) voice service, comprising:
receiving (200), by a Long Term Evolution (LTE) network communication device, preset Internet Protocol (IP) address information of an Evolved Packet Data Ggateway (ePDG); and
transferring (201), by the LTE network communication device, the IP address information of the ePDG to a terminal through an LTE network, in order to establish, by the terminal, a communication connection with a corresponding ePDG according to the IP address information of the ePDG in a Wi-Fi network, and initiating a Wi-Fi voice service though the ePDG with which the communication connection has established.

2. The method according to claim 1, wherein the LTE network communication device comprises a mobility management entity, a serving gateway, or a packet data network gateway.

3. The method according to claim 1 or 2, wherein the IP address information of the ePDG is transferred to the terminal by the LTE network communication device when the process of attaching to an LTE network, and/or creating a session, and/or modifying a session, and/or deleting a session, and/or a creating a bearer and/or modifying a bearer and/or deleting a bearer is performed by the terminal.

4. A method for initiating a Wi-Fi voice service, comprising:
receiving (300), by a terminal, IP address information of an Evolved Packet Data gateway (ePDG) from a Long Term Evolution (LTE) network communication device in a LTE network; and
establishing (301), by the terminal, a communication connection with a corresponding ePDG according to the IP address information of the ePDG in a Wi-Fi network, and initiating a Wi-Fi voice service though the ePDG with which the communication connection has established.

5. The method according to claim 4, wherein the IP address information of the ePDG comprises a list of IP addresses of the ePDGs;
the list of IP addresses of the ePDGs comprise IP addresses of at least one ePDG; establishing, by the terminal, the communication connection with the corresponding ePDG according to the IP address information of the ePDG comprises:
selecting, by the terminal, an IP address of a reachable ePDG from the list of IP addresses of the ePDGs, and connecting to a corresponding ePDG according to the selected IP address of the ePDG, and establishing an Internet Protocol Security tunnel with the ePDG.

6. The method according to claim 4, wherein the IP address information of the ePDG comprises an IP address of a primary ePDG;
establishing, by the terminal, the communication connection with the corresponding ePDG according to the IP address information of the ePDG comprises:
establishing, by the terminal, a communication connection with a corresponding primary ePDG according to the IP address of the primary ePDG;
receiving, by the terminal, an IP address of a recommended ePDG transmitted by the primary ePDG; and
establishing, by the terminal, a communication connection with a corresponding ePDG according to the IP address of the recommended ePDG.

7. A Long Term Evolution (LTE) network communication device, comprising: an information setting module and an information transmitting module, wherein
the information setting module is set to receive preset Internet Protocol (IP) address information of an Evolved Packet Data Gateway (ePDG); and
the information transmitting module is set to transfer the IP address information of the ePDG to a terminal through an LTE network, in order to establish, by the terminal, a communication connection with a corresponding ePDG according to the IP address information of the ePDG in a Wi-Fi network, and initiate a Wi-Fi voice service though the ePDG with which the communication connection has established.

8. The LTE network communications device according to claim 7, wherein the LTE network communication device comprises a mobility management entity, a serving gateway, or a packet data network gateway.

9. The LTE network communication device according to claim 7 or 8, wherein the information transmitting module is set to transfer the IP address information of the ePDG to the terminal when the process of attaching to an LTE network, and/or creating a session, and/or modifying a session, and/or deleting a session, and/or a creating a bearer and/or modifying a bearer and/or deleting a bearer is performed by the terminal.

10. A terminal, comprising: an information receiving module and a service initiating module; wherein
the information receiving module is set to receive Internet Protocol (IP) address information of Evolved Packet Data Gateway (ePDG) transmitted from a Long Term Evolution (LTE) network communication device in a LTE network; and
the service initiating module is set to establish a communication connection with a corresponding ePDG according to the IP address information of the ePDG in a wireless fidelity (Wi-Fi) network, and initiate a Wi-Fi voice service though the ePDG with which the communication connection has established.

11. The terminal according to claim 10, wherein the IP address information of the ePDG comprises a list of IP addresses of the ePDGs, and the list of IP addresses of the ePDGs comprise IP addresses of at least one ePDG;
the service initiating module is set to:
select an IP address of a reachable ePDG from the list of IP addresses of the ePDGs, connect to a corresponding ePDG according to the selected IP address, and establish an Internet Protocol Security tunnel with the ePDG to realize establishment of the communication connection; and
initiate the Wi-Fi voice service though the ePDG with which the communication connection has established.

12. The terminal according to claim 10, wherein the IP address information of the ePDG comprises the IP address of a primary ePDG;
the service initiating module is set to:
establish a communication connection with a corresponding primary ePDG according to the IP address of the primary ePDG;
receive an IP address of a recommended ePDG transmitted by the primary ePDG;
establish a communication connection with a corresponding ePDG according to the IP address of the recommended ePDG; and
initiate the Wi-Fi voice service though the ePDG with which the communication connection has established.

13. A communication system, comprising the LTE network communication device according to any one of claims 7-9 and the terminal according to any one of claims 10-12.
